# EUROPÄISCHE PATENTSCHRIFT

(11) **EP 3 116 767 B1**
(45) Veröffentlichungstag und Bekanntmachung des Hinweises auf die Patenterteilung: **13.12.2017**
(21) Anmeldenummer: 15704958.6
(22) Anmeldetag: 06.02.2015
(51) Int. Cl.: B62D 35/02, B60G 7/00

(54) **ABDECKUNG FÜR EINEN FAHRWERKSLENKER**
COVER FOR A SUSPENSION ARM
RECOUVREMENT POUR UN BRAS DE SUSPENSION DE TRAIN DE ROULEMENT

(30) Priorität: 08.03.2014 DE 102014003305
(43) Veröffentlichungstag der Anmeldung: 18.01.2017
(73) Patentinhaber: Audi AG, 85045 Ingolstadt (DE)
(72) Erfinder: RIEGELSBERGER, Wolfgang, 85092 Kösching (DE); FUCHS, Matthias, 85080 Gaimersheim (DE); LANGHOFF, Hans-Jürgen, 85101 Lenting (DE); BÖSL, Bastian, 85748 Garching (DE)
(74) Vertreter: Reichert, Thomas Klaus
(86) Internationale Anmeldenummer: PCT/EP2015/000247
(87) Internationale Veröffentlichungsnummer: WO 2015/135617

(56) Entgegenhaltungen:
- EP-A1- 2 476 565
- WO-A1-2013/083896
- FR-A1- 2 966 102
- JP-A- 2004 114 789
- JP-A- 2006 056 463
- JP-A- 2009 196 557
- JP-A- 2011 162 095
- JP-A- 2012 116 252
- US-A- 5 954 405
- US-A1- 2007 096 420

## Beschreibung

Die vorliegende Erfindung betrifft eine Abdeckung für einen Fahrwerkslenker, der mindestens eine Lageraufnahme für ein Lenkerlager aufweist, wobei die separat zum Fahrwerkslenker ausgebildete Abdeckung im Einbauzustand zumindest einen Teil der Unterseite des Fahrwerkslenkers abdeckt, wobei an der Abdeckung ein als Puffer dienender Fortsatz angeordnet ist, der sich von der Abdeckung in Richtung des Lenkerlagers erstreckt, sowie ein Kraftfahrzeug mit mindestens einem Fahrwerkslenker, an dem eine solche Abdeckung angeordnet ist.

Derartige Abdeckungen werden im Fahrzeugbau an Fahrwerkslenkern, auch Querlenker oder einfach Lenker genannt, angeordnet, um damit unter anderem eine bessere Umströmung des Unterbodens im Bereich der Radaufhängung zu erzielen und einen Schutz gegen Steinschläge zu gewährleisten. Die Radaufhängung verbindet das Rad mit der Karosserie und führt es unter Gewährung bestimmter Freiheitsgrade. Fahrwerkslenker können aus umgeformten (Stahl-)Blechen oder aus (umgeformten) Strangpressprofilen, beispielsweise einem Aluminium-Strangpressprofil, erzeugt werden. Der Fahrwerkslenker hat endständige Lageraufnahmen, in die ein vorzugsweise als Gummi-Metall-Lager ausgebildetes Lenkerlager eingesetzt werden kann. Die Lageraufnahmen können je nach Ausführungsform aus zwei konzentrischen Bohrungen in zwei parallel verlaufenden Seitenstegen des Fahrwerklenkers gebildet sein oder aus einer Führungshülse, in die das als Gummi-Metall-Hülsenlager ausgebildete Lenkerlager eingepresst wird, und die je nach Bauweise des Fahrwerkslenkers an diesen angeschweißt ist oder in einer oder mehreren Bohrungen in den Seitenstegen des Fahrwerkslenkers gehalten ist oder über einen Umformvorgang integral aus dem Material des Fahrwerkslenkers gebildet ist. Je nach gewählter Lenkergeometrie kann die radseitige Lenkeraufnahme im eingebauten Zustand den am tiefsten liegenden Punkt darstellen. Beim Überfahren von Hindernissen besteht die Gefahr, dass die Lageraufnahme auf dem Untergrund aufschlägt und dadurch die Lageraufnahme und/oder das Lenkerlager beschädigt wird.

Die EP 2 435 288 A1 zeigt eine Abdeckung an einem etwa quer zur Fahrtrichtung verlaufenden Radführungselement einer Hinterachse eines Kraftfahrzeugs, wobei die Abdeckung in Ihrer Einbaulage am Kraftfahrzeug im Wesentlichen etwa horizontal verläuft und in einen Abschnitt vor der Hinterachse sowie in einen Abschnitt hinter der Hinterachse unterteilt ist, wobei die beiden Abschnitte mit unterschiedlichen Winkeln zu einer horizontalen Ebene verlaufen und ausgehend von ihrem Übergangsbereich aufwärts gerichtet sind.

Die EP 2 476 565 A1 beschreibt eine an einer Radaufhängungsvorrichtung eines Fahrzeugs montierbare, luftablenkende Abdeckung zum Begradigen eines Luftstroms unterhalb des Fahrzeugs, wobei die luftablenkende Abdeckung einen an einem Radaufhängungselement der Radaufhängungsvorrichtung montierbaren inneren Abdeckabschnitt umfasst, welcher sich in eine Breitenrichtung des Fahrzeugs erstreckt, wobei der innere Abdeckabschnitt eine vertikale Strombegradigungsfläche aufweist, welche sich in einer Längsrichtung des Fahrzeugs erstreckt und in Richtung eines Mittelbereichs bezüglich der Breitenrichtung des Fahrzeugs weist, wobei die luftablenkende Abdeckung ferner einen unteren Abdeckabschnitt umfasst, welcher an einem Unterteil des Radaufhängungselements montierbar ist und eine Strombegradigungsfläche aufweist, welche nach unten von dem Fahrzeug weist, wobei der innere Abdeckabschnitt und der untere Abdeckabschnitt integral miteinander gebildet sind, wobei der untere Abdeckabschnitt ein Bodenplattenelement ist, welches unterhalb eines Endes des Radaufhängungselements liegt, und der innere Abdeckabschnitt ein inneres Plattenelement ist und wobei das innere Plattenelement sich nach oben von einem inneren Rand des Bodenplattenelements erstreckt, welches in Richtung des Mittelbereichs bezüglich der Breitenrichtung des Fahrzeugs gerichtet ist.

Die genannten Druckschriften bieten keinen zusätzlichen Schutz für eine Lageraufnahme des Fahrwerkslenkers, weshalb beim Überfahren von Hindernissen zu erwarten ist, dass diese auf die empfindliche Lageraufnahme durchschlagen.

Die DE 10 2007 046 150 A1 offenbart eine Schutzvorrichtung für Bauteile an einer Fahrzeugunterseite eines Lastkraftwagens mit wenigstens einem Schutzelement, auf welchem sich der Lastkraftwagen in einem Notfall abstützt und wobei das Schutzelement als Teil eines Bauteils (Lagerschale) einer Achsaufhängung einer Fahrzeugachse des Lastkraftwagens ausgebildet ist. Dieses Schutzelement eignet sich jedoch nicht als gattungsgemäße Abdeckung für einen Fahrwerkslenker.

Weiterhin sei auf die Druckschriften JP 2006/056463 A, JP 2009/196557 A, WO 2013/083896 A1, US 5 954 405 A und US 2007/096420 A1 verwiesen, die jeweils eine gattungsgemäße Abdeckung für einen Fahrwerkslenker zeigen. Das Dokument JP 2006/056463 offenbart eine Abdeckung gemäß dem Oberbegriff des Anspruchs 1. Aufgabe der vorliegenden Erfindung ist es daher eine Abdeckung für einen Fahrwerkslenker bereitzustellen, welche insbesondere die Lageraufnahme des Fahrwerkslenkers besser gegen Beschädigungen geschützt ist.

Diese Aufgabe wird durch die Merkmale des Patentanspruchs 1 gelöst.

Ein Kraftfahrzeug mit mindestens einem Fahrwerkslenker, an dem eine erfindungsgemäße Abdeckung angeordnet ist, wird in Patentanspruch 8 beansprucht.

Abdeckung für einen Fahrwerkslenker, der mindestens eine Lageraufnahme für ein Lenkerlager aufweist, wobei die separat zum Fahrwerkslenker ausgebildete Abdeckung im Einbauzustand zumindest einen Teil der Unterseite des Fahrwerkslenkers abdeckt und wobei an der Abdeckung ein als Puffer dienender Fortsatz angeordnet ist, der sich von der Abdeckung in Richtung des Lenkerlagers erstreckt, wobei die räumliche Gestalt des Fortsatzes der Außenkontur des Lenkerlagers angepasst ist und der Fortsatz teilweise an dem Lenkerlager anliegt.

Indem an der vorzugsweise als Luftleiteinrichtung ausgebildeten Abdeckung ein als (Anschlag-)Puffer dienender Fortsatz angeordnet ist, der sich in Richtung des Lenkerlagers erstreckt, befindet sich zwischen einem eventuell auftreffenden Hindernis und dem Lenkerlager eine zusätzlich schützende Struktur. Dadurch reduziert sich die Gefahr der Beschädigung sowohl der Lageraufnahme als auch des Lenkerlagers selbst. Indem sich der Fortsatz in Richtung des Lenkerlagers erstreckt, wird die das Lenkerlager aufnehmende Lageraufnahme zwangsläufig mit geschützt. Indem die räumliche Gestalt des Fortsatzes der Außenkontur des Lenkerlagers angepasst ist und der Fortsatz teilweise an dem Lenkerlager anliegt, kann die Krafteinleitung auf das Lenkerlager gezielt beeinflusst werden.

In einer bevorzugten Ausführung lässt sich der Fortsatz unter Einwirkung einer äußeren Kraft deformieren. Eine Deformierbarkeit des Fortsatzes verbessert die Schutzwirkung bei einem Anprall eines festen Körpers, da der Fortsatz die Energie abbaut und nur teilweise an das Lenkerlager bzw. die Lageraufnahme weitergibt.

In einer bevorzugten Ausführung weist der Fortsatz eine rippenartige Struktur auf. Die rippenartige Struktur ist vergleichsweise leicht und bietet durch die Rippen vorteilhafte Deformationseigenschaften.

In einer bevorzugten Ausführung besteht die Abdeckung aus einem Kunststoff. Eine Abdeckung aus Kunststoff ist besonders gewichtssparend und einfach in der Herstellung.

In einer bevorzugten Ausführung ist der Fortsatz an der Abdeckung integral ausgebildet. Die integrale Ausbildung des Fortsatzes mit der Abdeckung, beispielsweise als einstückiges Spritzgussteil, erlaubt eine einfache Herstellung und erleichtert die spätere Handhabung.

In einer bevorzugten Ausführung ist der Fortsatz als separates Bauteil an der Abdeckung befestigt. Dadurch kann der Fortsatz bedarfsweise an der Abdeckung befestigt werden, wodurch beispielsweise eine Basis-Abdeckung für spezielle Märkte mit mehr Schlechtwegstrecken um einen Fortsatz erweitert werden kann.

In einer bevorzugten Ausführung besteht der Fortsatz aus einem Leichtmetall. Für einen nachträglich an der Abdeckung zu befestigenden Fortsatz kann auch ein Leichtmetall in Frage kommen, da es äußeren Einflüssen noch besser widerstehen kann.

Ein Kraftfahrzeug hat mindestens einen Fahrwerkslenker, an dem eine erfindungsgemäße Abdeckung angeordnet ist. Vorzugsweise sind diese Fahrwerkslenker an einer Achse, insbesondere der Hinterachse, paarweise angeordnet und beispielsweise als Federlenker ausgebildet.

Weitere Einzelheiten und Vorteile der Erfindung ergeben sich aus der nachstehenden Beschreibung eines bevorzugten Ausführungsbeispiels unter Bezugnahme auf die Zeichnungen.

Darin zeigen:
Fig. 1 eine Abdeckung mit einer ersten Ausführungsform eines Fortsatzes;
Fig. 2 eine Detailansicht einer zweiten Ausführungsform des Fortsatzes;
Fig. 3 eine seitliche Schnittansicht einer dritten Ausführungsform des Fortsatzes;
Fig. 4 einen Fahrwerkslenker mit der Abdeckung.

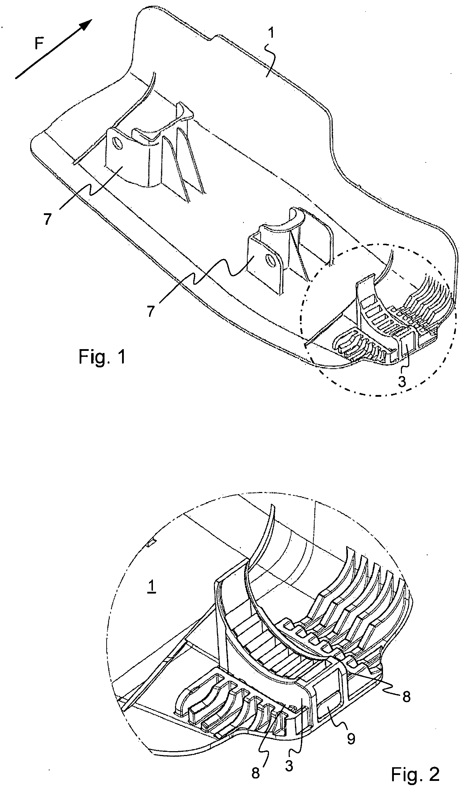

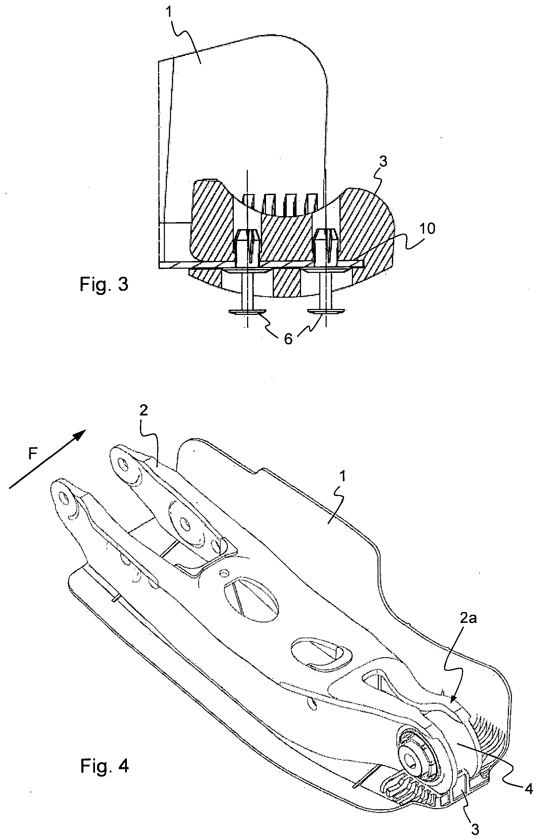

Gemäß der Fig. 1 ist die Abdeckung 1 als Luftleiteinrichtung aus einem Kunststoff geformt. Dabei ist die Abdeckung 1 in Fahrtrichtung F vorne mit einer hochgezogenen Wandung ausgebildet, die auch als Steinschlagschutz dient. Die Abdeckung 1 kann mittels zweier Befestigungsabschnitte 7 an dem in Fig. 4 dargestellten Fahrwerkslenker 2 befestigt werden. Auf der im eingebauten Zustand radseitigen Außenkante befindet sich ein integral mit der Abdeckung 1 ausgebildeter Fortsatz 3 als erste Ausführungsform der Erfindung. Der Fortsatz 3 hat eine kreisbogenförmige Oberseite, die mit dem in Fig. 4 dargestellten Lenkerlager 4 komplementär zusammenwirkt. Neben dem weit herausragenden Teil des Fortsatzes 3 sind beiderseits Nuten 8 vorgesehen, in die jeweils ein Steg der Lageraufnahme 2a des Fahrwerkslenkers 2 passt.

In Fig. 2 ist eine zweite Ausführungsform des Fortsatzes 3 im Detail gezeigt. Dort ist unter anderem auch die rippenartige Struktur besonders gut zu erkennen. Die zweite Ausführungsform zeichnet sich dadurch aus, dass in einem Schacht des Fortsatzes 3 ein Einleger 9 aus einem härteren Werkstoff als der restliche Fortsatz 3, vorzugsweise aus Metall wie zum Beispiel Aluminium, eingeführt ist. Als weitere Alternative kann der Einleger 9 auch in den Fortsatz 3 eingespritzt sein. Der Einleger 9 verbessert die Schutzwirkung des Fortsatzes 3 für die Lageraufnahme 2a zusätzlich. Auch dieser Fortsatz 3 hat eine kreisbogenförmige Oberseite, die mit dem in Fig. 4 dargestellten Lenkerlager 4 komplementär zusammenwirkt. Neben dem weit herausragenden Teil des Fortsatzes 3 sind beiderseits Nuten 8 vorgesehen, in die jeweils eine der Lageraufnahmen 2a des Fahrwerkslenkers 2 passt.

In Fig. 3 ist eine dritte Ausführungsform des Fortsatzes 3 gezeigt, die als separates Bauteil an der Abdeckung 1 befestigt werden kann. Dazu weist der Fortsatz 3 ein Maul 10 auf, das den Boden der Abdeckung 1 aufnehmen kann. Mittels geeigneten Befestigungsmitteln 6 wird der Fortsatz 3 an der Abdeckung 1 festgelegt.

Die Fig. 4 zeigt eine Abdeckung 1, die mit einem Fahrwerkslenker 2 verbunden wurde (Einbauzustand). Der Fahrwerkslenker 2 ist vorliegend als umgeformtes Strangpressprofil (aus Aluminium) ausgebildet, welches einen nach unten offenen u-förmigen Profilquerschnitt aufweist. Der Fahrwerkslenker 2 hat an dem radseitigen Ende seiner Haupterstreckungsrichtung eine aus zwei parallelen Stegen gebildete Lageraufnahme 2a. Die Lageraufnahme 2a hat zwei konzentrische Bohrungen (jeweils eine in einem der Stege), in die ein als Gummi-Metall-Hülsenlager ausgebildetes Lenkerlager 4 eingesetzt wurde. Die Abdeckung 1 deckt einen Großteil der Unter- und Vorderseite des Fahrwerkslenkers 2 ab, wobei der Fortsatz 3 mit der Außenhülse des Lenkerlagers 4 als Puffer zusammenwirkt.

### Liste der Bezugszeichen:

- F: Fahrtrichtung

- 1: Abdeckung
- 2: Fahrwerkslenker
- 2a: Lageraufnahme
- 3: Fortsatz
- 4: Lenkerlager
- 6: Befestigungsmittel
- 7: Befestigungsabschnitt
- 8: Nut
- 9: Einleger
- 10: Maul

## Patentansprüche

1. Abdeckung (1) für einen Fahrwerkslenker (2), der mindestens eine Lageraufnahme (2a) für ein Lenkerlager (4) aufweist, wobei die separat zum Fahrwerkslenker (2) ausgebildete Abdeckung (1) im Einbauzustand zumindest einen Teil der Unterseite des Fahrwerkslenkers (2) abdeckt, wobei an der Abdeckung (1) ein als Puffer dienender Fortsatz (3) angeordnet ist, der sich von der Abdeckung (1) in Richtung des Lenkerlagers (4) erstreckt, **dadurch gekennzeichnet, dass** die räumliche Gestalt des Fortsatzes (3) der Außenkontur des Lenkerlagers (4) angepasst ist und der Fortsatz (3) teilweise an dem Lenkerlager (4) anliegt.

2. Abdeckung (1) nach Anspruch 1, **dadurch gekennzeichnet, dass** sich der Fortsatz (3) unter Einwirkung einer äußeren Kraft deformieren lässt.

3. Abdeckung (1) nach Anspruch 1 oder 2, **dadurch gekennzeichnet, dass** der Fortsatz (3) eine rippenartige Struktur aufweist.

4. Abdeckung (1) nach einem der Ansprüche 1 bis 3, **dadurch gekennzeichnet, dass** die Abdeckung (1) aus einem Kunststoff besteht.

5. Abdeckung (1) nach einem der Ansprüche 1 bis 4, **dadurch gekennzeichnet, dass** der Fortsatz (3) an der Abdeckung (1) integral ausgebildet ist.

6. Abdeckung (1) nach einem der Ansprüche 1 bis 4, **dadurch gekennzeichnet, dass** der Fortsatz (3) als separates Bauteil an der Abdeckung (1) befestigt ist.

7. Abdeckung (1) nach Anspruch 6, **dadurch gekennzeichnet, dass** der Fortsatz (3) aus einem Leichtmetall besteht.

8. Kraftfahrzeug mit mindestens einem Fahrwerkslenker (2), an dem eine Abdeckung (1) mit den Merkmalen des Anspruchs 1 angeordnet ist.

## Claims

1. Cover (1) for a chassis control arm (2) that has at least one bearing seat (2a) for a control arm bearing (4), wherein the cover (1), which is formed separately from the chassis control arm (2), covers in the installed state at least part of the underside of the chassis control arm (2), wherein an extension (3) serving as a buffer is arranged on the cover (1), said extension extending from the cover (1) in the direction of the control arm bearing (4), **characterised in that** the spatial shape of the extension (3) is adapted to the outer contour of the control arm bearing (4) and the extension (3) rests partly on the control arm bearing (4).

2. Cover (1) according to claim 1, **characterised in that** the extension (3) can be deformed under the influence of an external force.

3. Cover (1) according to claim 1 or 2, **characterised in that** the extension (3) has a rib-like structure.

4. Cover (1) according to any one of claims 1 to 3, **characterised in that** the cover (1) consists of a plastic.

5. Cover (1) according to any one of claims 1 to 4, **characterised in that** the extension (3) is formed integrally on the cover (1).

6. Cover (1) according to any one of claims 1 to 4, **characterised in that** the extension (3) is secured to the cover (1) as a separate component.

7. Cover (1) according to claim 6, **characterised in that** the extension (3) consists of a light metal.

8. Motor vehicle with at least one chassis control arm (2) on which a cover (1) with the features of claim 1 is arranged.

## Revendications

1. Couvercle (1) pour un bras de suspension de châssis (2), qui comporte au moins un logement de palier (2a) destiné à un palier de bras (4),
dans lequel le couvercle (1) réalisé séparément du bras de suspension de châssis (2) couvre à l'état monté au moins une partie du dessous du bras de suspension de châssis (2) et dans lequel un prolongement (3) servant de tampon, qui s'étend à partir du couvercle (1) en direction du palier de bras (4), est agencé au niveau du couvercle (1),
**caractérisé en ce que** la configuration spatiale du prolongement (3) est adaptée au contour extérieur du palier de bras (4) et le prolongement (3) repose partiellement sur le palier de bras (4).

2. Couvercle (1) selon la revendication 1, **caractérisé en ce que** le prolongement (3) se laisse déformer sous l'action d'une force extérieure.

3. Couvercle (1) selon la revendication 1 ou 2, **caractérisé en ce que** le prolongement (3) présente une structure du type nervures.

4. Couvercle (1) selon l'une quelconque des revendications 1 à 3, **caractérisé en ce que** le couvercle (1) est en plastique.

5. Couvercle (1) selon l'une quelconque des revendications 1 à 4, **caractérisé en ce que** le prolongement (3) est réalisé comme partie intégrée au couvercle (1).

6. Couvercle (1) selon l'une quelconque des revendications 1 à 4, **caractérisé en ce que** le prolongement (3) est fixé au couvercle (1) en tant que pièce séparée.

7. Couvercle (1) selon la revendication 6, **caractérisé en ce que** le prolongement (3) est en un métal léger.

8. Véhicule automobile avec au moins un bras de suspension de châssis (2) sur lequel est agencé un couvercle (1) ayant les caractéristiques de la revendication 1.
